**Europäisches Patentamt**

**European Patent Office**

**Office européen des brevets**

(19)

(11) Veröffentlichungsnummer : **0 338 296 B1**

(12) # EUROPÄISCHE PATENTSCHRIFT

(45) Veröffentlichungstag der Patentschrift :
**22.07.92 Patentblatt 92/30**

(51) Int. Cl.⁵ : **B64C 1/38, B64D 13/00**

(21) Anmeldenummer : **89105591.5**

(22) Anmeldetag : **30.03.89**

(54) **Flugzeug.**

(30) Priorität : **16.04.88 DE 3812739**

(43) Veröffentlichungstag der Anmeldung :
**25.10.89 Patentblatt 89/43**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**US-A- 3 776 305**
**US-A- 4 057 104**
**US-A- 4 377 198**
**US-A- 4 739 823**

(73) Patentinhaber : **Deutsche Lufthansa AG**
**Von-Gablenz-Strasse 2-6**
**W-5000 Köln 21 (DE)**

(72) Erfinder : **Merensky, Harald, Dipl.-Ing.**
**Saseler Chaussee 218**
**W-2000 Hamburg 65 (DE)**

(74) Vertreter : **Selting, Günther, Dipl.-Ing. et al**
**Patentanwälte von Kreisler, Selting, Werner**
**Deichmannhaus am Hauptbahnhof**
**W-5000 Köln 1 (DE)**

EP 0 338 296 B1

## Beschreibung

Die Erfindung betrifft ein Flugzeug nach dem Oberbegriff des Patentanspruchs 1.

Flugzeuge weisen an der Innenseite ihrer Außenhaut eine Dämmschicht aus wärmeisolierendem Material auf, um die extrem niedrigen Außentemperaturen, die in großen Flughöhen auftreten, vom Flugzeuginneren fernzuhalten. Andererseits ist es erforderlich, im Flugzeuginnern vorgefertigte Speisen und Getränke für die Passagiere kühl zu halten. Für die Kühlhaltung werden entweder Kühlaggregate, die vom Energiesystem des Flugzeugs aus versorgt werden, eingesetzt oder es wird Trockeneis benutzt. Ein energiebetriebenes Kühlsystem erhöht das Flugzeuggewicht und erfordert aufwendige Aggregate. Die Trockeneiskühlung ist dagegen arbeitsaufwendig und umständlich.

US-A-4 057 104 beschreit ein Flugzeug, bei dem in der Spitze des vom Heck aufragenden Vertikalstabilisators des Leitwerks in einem Gehäuse eine Radareinrichtung untergebracht ist, die in einer Kühlkammer gekapselt untergebraht ist. Die Kühlkammer wird von einem Kältemittel umströmt. Der geschlossene Kältemittelkreislauf führt an der Außenwand des Gehäuses entlang, so daß das Gehäuse der Kühlkammer als Verdampfer und die Außenhaut des Flugzeugs als Kondensor eines Kälteaggregates wirken, welches die Wärme der Radareinrichtung an die Außenhaut des Gehäuses abführt. Eine derartige Kühlvorrichtung ist sehr aufwendig und sie erfordert eine flüssigkeitsdichte Kapselung der die elektrischen Geräte aufnehmenden Kühlkammer.

Der Erfindung liegt die Aufgabe zugrunde, in einem Flugzeug das Kühlhalten von Speisen und Getränken sowie anderer Güter zu vereinfachen.

Die Lösung dieser Aufgabe erfolgt erfindungsgemäß mit den im kennzeichnenden Teil des Patentanspruchs 1 angegebenen Merkmalen.

Nach der Erfindung ist unmittelbar hinter der Außenhaut des Flugzeugs eine Kaltluftkammer angeordnet, die in Wärmeaustausch mit Außenluft steht, welche in großen Flughöhen sehr kalt ist. In der Kaltluftkammer wird Luft aus dem Flugzeuginnern durch Wärmeaustausch an der Außenhaut gekühlt. Diese Luft wird in eine Kühlkammer geleitet, welche die zu kühlenden Güter aufnimmt. Dadurch ist es möglich, die Kälte der Außenluft zum Kühlen der Kühlkammer zu benutzen, ohne daß Außenluft unmittelbar in die Kühlkammer einströmt. Durch die Benutzung der hinter der Außenhaut liegenden Kältekammer wird die Außenhaut weder unterbrochen noch in irgendeiner Weise verändert, so daß die Flugeigenschaften des Flugzeugs nicht beeinträchtigt werden. Lediglich ein Bereich der Außenhaut wird als Wärmeaustauschfläche benutzt. In der Kaltluftkammer und in der Kühlkammer herrscht der Innendruck des Flugzeugs, so daß diese Kammern druckmäßig dem Flugzeuginnern zuzuordnen sind, während sie temperaturmäßig von außen beeinflußt werden. Die beiden Kammern bilden ein Umluftsystem, in welchem bei geschlossener Kühlkammertür die Luftmenge zirkuliert und in der Kaltluftkammer gekühlt wird, während sie in der Kühlkammer die Kälte an das zu kühlende Gut abgibt.

Nach Patentanspruch 2 ist eine Temperaturregeleinrichtung vorgesehen, die die Luftförderrate des Umlaufsystems derart steuert, daß die im Innern der Kühlkammer herrschende Temperatur auf dem gewünschten Temperaturwert konstant gehalten wird. Wenn die Temperatur über den gewünschten Wert ansteigt, wird die Strömungsrate der Luft erhöht, wodurch eine stärkere Kühlung in der Kühlkammer einsetzt. Wenn dagegen die Temperatur in der Kühlkammer unter den gewünschten Wert absinkt, wird die Luftzirkulation verrringert, so daß weniger Kälte von der Kaltluftkammer in die Kühlkammer übertragen wird. Als Stellglieder für diese Regelung können Ventile, z.B. Luftklappen und/oder Gebläse, benutzt werden.

Die Kühlkammer sollte gegenüber dem Innenraum des Flugzeugs wärmeisoliert sein. Eine weitere Wärmeisolierung kann zwischen Kaltluftkammer und Kühlkammer vorgesehen sein.

Zur Überbrückung von Bodenzeiten, in denen sich die Luft in der Kaltluftkammer erwärmt und der Luftaustausch zwischen Kaltluftkammer und Kühlkammer gesperrt werden muß, ist zweckmäßigerweise in der Kühlkammer ein Kältespeicher vorgesehen. Dieser Kältespeicher enthält beispielsweise eine Flüssigkeit oder ein Gel mit einer großen Kältekapazität.

Die erfindungsgemäße Kühleinrichtung eignet sich insbesondere für Passagierflugzeuge und die Kühlkammer ist zweckmäßigerweise geeignet, mindestens einen Servicewagen aufzunehmen. Die Kühleinrichtung kann aber auch in Frachtflugzeugen Verwendung finden, um einen größeren Frachtraum zur Aufnahme von verderblichen Gütern zu kühlen.

Zweckmäßigerweise ist die Kühlkammer unmittelbar neben der Kaltluftkammer angeordnet und von dieser nur durch eine einzige Wand getrennt. Das erfindungsgemäße Prinzip erlaubt es aber auch, die Kühlkammer entfernt von der Kaltluftkammer anzuordnen und beide Kammern durch den Zuströmkanal und den Abströmkanal miteinander zu verbinden.

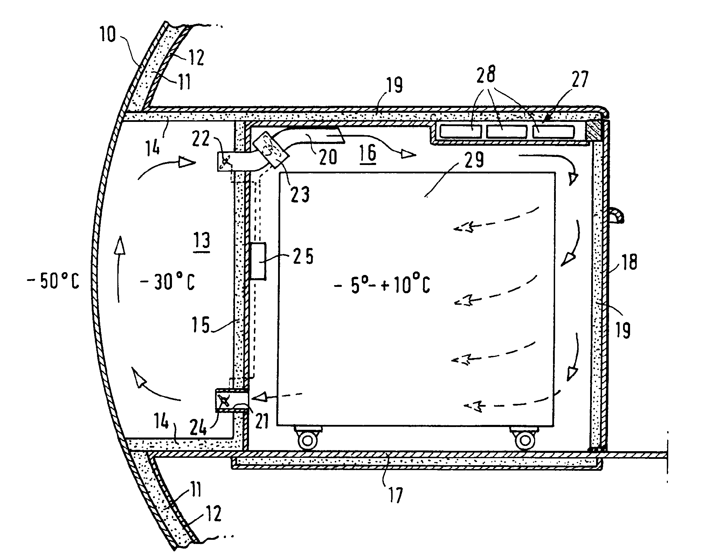

Im folgenden wird unter Bezugnahme auf die einzige Figur der Zeichnung ein Ausführungsbeispiel der Erfindung näher erläutert.

In der Zeichnung ist ein Vertikalschnitt durch einen Teil des Flugzeugrumpfes dargestellt.

Das Flugzeug weist eine aus Metall bestehende Außenhaut 10 auf, hinter der eine Dämmschicht 11 aus wärmeisolierendem Material angeordnet ist. Hinter der Dämmschicht 11, also zum Flugzeuginnern hin, befindet sich die Innenverkleidung 12.

In einem Teilbereich der Außenhaut 10 ist die Dämmschicht 11 fortgelassen, um eine Kaltluftkammer 13 zu bilden. Die in dieser Kaltluftkammer 13 enthaltene Luft steht über die wärmeleitende Außenhaut 10 in Wärmeaustausch mit der Außenluft des Flugzeugs. Zum Flugzeuginnern hin ist die Kaltluftkammer 13 durch Dämmschichten 14 thermisch isoliert. Eine weitere Dämmschicht 15 trennt die Kaltluftkammer 13 von der Kühlkammer 16. Die Kühlkammer 16 ist nach unten durch einen Zwischenboden 17 des Flugzeugs begrenzt und sie weist eine sich zum Flugzeuginnern öffnende Tür 18 auf. Sämtliche Wände der Kühlkammer 16, einschließlich der Tür 18, sind mit wärmeisolierenden Dämmschichten 19 bekleidet.

Von der Kaltluftkammer 13 führt der Zuströmkanal 20 in den oberen Bereich der Kühlkammer 16 hinein und vom unteren Bereich der Kühlkammer 16 führt der Rückströmkanal 21 in die Kaltluftkammer 13 hinein. Der Zuströmkanal 20 enthält ein Luftmengenventil 22 und ein Gebläse 23 und der Rückströmkanal 21 enthält ein Luftmengenventil 24. Die Luftmengenventile 22 und 24 sowie das Gebläse 23 werden von einem Thermostaten 25 gesteuert, welcher in der Kühlkammer 16 angeordnet ist. Die Steuerleitungen sind durch gestrichelte Linien angedeutet.

In der Oberwand der Kühlkammer 16 ist ein Kältespeicher 27 mit mehreren thermisch aufladbaren Kälteakkus 28 angeordnet.

In der Zeichnung ist ein Beispiel für die Temperaturen außerhalb des Flugzeugs und in den beiden Kammern 13 und 16 angegeben. Bei einer Außentemperatur von -50 °C herrscht beispielsweise im Innern der Kaltluftkammer 13 eine Temperatur von -30 °C. Durch Regelung der Luftmenge, die den Zuströmkanal 20 und den Abströmkanal 21, durchströmt, kann im Innern der Kühlkammer 16 eine wählbare Temperatur im Bereich von -5 °C bis +10 °C konstant aufrechterhalten werden.

Die in der Kaltluftkammer 13 gekühlte Luft wird von dem Gebläse 23 angesaugt und durch den Zuströmkanal 20 in den oberen Bereich der Kühlkammer 16 geblasen. Die Luft verläßt die Kühlkammer 16 durch den Rückströmkanal 21 der zurück in die Kaltluftkammer 13 führt. Auf diese Weise bilden Kaltluftkammer 13 und Kühlkammer 16 ein geschlossenes Luftumlaufsystem, in welchem der Innendruck des Flugzeugs herrscht. Bei Erreichen der gewünschten Temperatur in der Kühlkammer 16 schaltet der Thermostat 25 das Gebläse 23 ab und schließt die Luftmengenventile 22,24. Der Kältespeicher 27 verhindert, daß die Temperatur in der Kühlkammer 16 im Falle einer zu hohen Außentemperatur des Flugzeugs schnell ansteigt, so daß Bodenzeiten überbrückt werden können, ohne daß die Temperatur in der Kühlkammer zu hohe Werte annimmt. Während des Reisefluges wird der Kältespeicher 27 wieder aufgeladen.

Die Kühlkammer 16 ist so bemessen, daß sie mindestens einen Servicewagen 29 aufnimmt, der Fächer zur Aufnahme von Speisen oder Getränken aufweist.

## Patentansprüche

1. Flugzeug mit einer Außenhaut (10) und einer hinter der Außenhaut (10) angeordneten Dämmschicht (11), wobei unmittelbar hinter einem von der Dämmschicht (11) freien Bereich der Außenhaut (10) eine Kältekammer angeordnet ist, welche mit einer Kühlkammer (16) in Wärmeaustausch steht,
**dadurch gekennzeichnet,**
daß die Kältekammer eine Kaltluftkammer (13) ist, in der der Innendruck des Flugzeugs herrscht, daß die Kühlkammer (16) durch eine Tür (18) vom Flugzeuginnern aus zugänglich ist und daß das Innere der Kühlkammer (16) mit der Kaltluftkammer (13) über einen Zuströmkanal (20) und einen Rückströmkanal (21) verbunden ist.

2. Flugzeug nach Anspruch 1, dadurch gekennzeichnet, daß eine Temperaturregeleinrichtung (25) vorgesehen ist, die die den Zuströmkanal (20) und/oder den Rückströmkanal (21) durchströmende Luftmenge in Abhängigkeit von der Temperatur der Kühlkammer (16) verändert.

3. Flugzeug nach Anspruch 2, dadurch gekennzeichnet, daß im Zuströmkanal (20) und/oder im Rückströmkanal (21) ein thermostatisch gesteuertes Luftmengenventil (22;24) angeordnet ist.

4. Flugzeug nach einem der Ansprüche 1 bis 3, dadurch gekennzeichnet, daß im Zuströmkanal (20) und/oder im Rückströmkanal (21) ein Gebläse (23) vorgesehen ist.

5. Flugzeug nach einem der Ansprüche 1 bis 4, dadurch gekennzeichnet, daß die Innenwände der Kaltluftkammer (13) mit Dämmschichten (14,15) versehen sind.

6. Flugzeug nach einem der Ansprüche 1 bis 5, dadurch gekennzeichnet, daß die Kühlkammer (16) mindestens einen Servicewagen (29) aufnimmt.

7. Flugzeug nach einem der Ansprüche 1 bis 6, dadurch gekennzeichnet, daß in der Kühlkammer (16) ein Kältespeicher (27) vorgesehen ist.

## Claims

1. An airplane having an outer skin (10) and an insulating layer (11) arranged behind said outer skin (10), a cold chamber being arranged immediately behind a portion of said outer skin (10) that is not covered by said insulating layer (11), said cold chamber being in heat exchange with a cooling chamber (16),
**characterised in that**
said cold chamber is a cold air chamber (13) in which the inner pressure of the plane prevails, that said cooling chamber (16) is accessible from inside the plane by a door (18), and that the inside of said cooling chamber (16) is connected with said cold air chamber via a flow-in duct (20) and a flow-out duct (21).

2. The airplane according to claim 1, characterised in that a temperature controlling device (25) is provided for varying the quantity of air flowing through said flow-in duct (20) and/or said flow-out duct (21) in dependence on the temperature in said cooling chamber (16).

3. The airplane according to claim 2, characterised in that a thermostatically controlled air quantity regulating valve (22;24) is provided in said flow-in duct (20) and/or said flow-out duct (21).

4. The airplane according to one of claims 1 to 3, characterised in that a fan (23) is provided in said flow-in duct (20) and/or said flow-out duct (21).

5. The airplane according to one of claims 1 to 4, characterised in that the inner walls of said cold air chamber (13) are provided with insulating layers (14, 15).

6. The airplane according to one of claims 1 to 5, characterised in that said cooling chamber (16) is adapted to take up at least one serving trolley (29).

7. The airplane according to one of claims 1 to 6, characterised in that said cooling chamber (16) is provided with a coldness accumulator (27).

## Revendications

1. Avion, comportant une peau extérieure (10) et une couche isolante (11) disposée derrière cette peau extérieure (10), dans lequel une chambre de froid, qui est en relation d'échange thermique avec une chambre de réfrigération (16), est disposée directement derrière une zone de la peau extérieure (10) qui est dépourvue de couche isolante (11),
**caractérisé en ce que**
la chambre de froid est une chambre d'air froid (13) dans laquelle règne la pression intérieure de l'avion, en ce que la chambre de réfrigération (16) est accessible à partir de l'intérieur de l'avion par une porte (18) et en ce que l'intérieur de cette chambre de réfrigération (16) est relié à la chambre d'air froid, par l'intermédiaire d'un conduit d'amenée d'écoulement (20) et d'un conduit de retour d'écoulement (21).

2. Avion suivant la revendication 1, caractérisé en ce qu'il est prévu un dispositif de régulation de température (25) qui, en fonction de la température de la chambre de réfrigération (16), modifie le débit d'air passant dans le conduit d'amenée d'écoulement (20) et/ou dans le conduit de retour d'écoulement (21).

3. Avion suivant la revendication 2, caractérisé en ce qu'un papillon de débit d'air (22, 24) à commande thermostatique est disposé dans le conduit d'amenée d'écoulement (20) et/ou dans le conduit de retour d'écoulement (21).

4. Avion suivant l'une des revendications 1 à 3, caractérisé en ce qu'un ventilateur (23) est prévu dans le conduit d'amenée d'écoulement (20) et/ou dans le conduit de retour d'écoulement (21).

5. Avion suivant l'une des revendications 1 à 4, caractérisé en ce que les parois intérieures de la chambre d'air froid (13) sont pourvues de couches isolantes (14, 15).

6. Avion suivant l'une des revendications 1 à 5, caractérisé en ce que la chambre de réfrigération (16) peut recevoir au moins un chariot de service (29).

7. Avion suivant l'une des revendications 1 à 6, caractérisé en ce qu'un accumulateur de froid (27) est prévu dans la chambre de réfrigération (16).